# EUROPÄISCHE PATENTSCHRIFT

(11) **EP 2 430 625 B1**
(45) Veröffentlichungstag und Bekanntmachung des Hinweises auf die Patenterteilung: **20.03.2013**
(21) Anmeldenummer: 10720011.5
(22) Anmeldetag: 11.05.2010
(51) Int. Cl.: G08G 1/123, G08B 25/01, H04M 11/04

(54) **VERFAHREN ZUR NUTZUNG DER RECHENEINHEIT EINER NOTRUFEINHEIT UND NOTRUFEINHEIT**
METHOD FOR USING THE COMPUTING UNIT OF AN EMERGENCY CALL UNIT, AND EMERGENCY CALL UNIT
PROCÉDÉ D'UTILISATION DE L'UNITÉ DE CALCUL D'UNE UNITÉ D'APPEL D'URGENCE ET UNITÉ D'APPEL D'URGENCE

(30) Priorität: 11.05.2009 DE 102009003010; 29.05.2009 DE 102009026578
(43) Veröffentlichungstag der Anmeldung: 21.03.2012
(73) Patentinhaber: Continental Teves AG & Co. oHG, 60488 Frankfurt (DE); Continental Automotive GmbH, 30165 Hannover (DE)
(72) Erfinder: STÄHLIN, Ulrich, 65670 Eschborn (DE); BREYER, Lutz-Peter, 85622 Feldkirchen (DE)
(74) Vertreter: Höer, Daniela
(86) Internationale Anmeldenummer: PCT/EP2010/056465
(87) Internationale Veröffentlichungsnummer: WO 2010/130739

(56) Entgegenhaltungen:
- DE-A1-102008 013 748
- GB-A- 2 435 536
- US-A1- 2004 199 916

## Beschreibung

Die Erfindung betrifft ein Verfahren zur Nutzung der Recheneinheit einer Notrufeinheit und eine entsprechend eingerichtete Notrufeinheit, die ein zelluläres Kommunikationsmodul zum Absetzen eines Notruf in ein öffentliches Mobilfunknetz aufweist und über ein Fahrzeug-Kommunikationsnetz, bspw. ein kabelgebundenes oder drahtloses Bussystem wie CAN oder MOST, ein WLAN-Netz oder Bluetooth, mit anderen Fahrzeugeinheiten verbunden ist, die auch jeweils eine Recheneinheit aufweisen. Ein bei der Erfindung eingesetztes zelluläres Kommunikationsmodul weist typischer Weise Hochfrequenzkomponenten sowie Anlag-Digital- bzw. Digital-Analogwandler auf. Diese Komponenten werden durch Abarbeitung eines Mobilfunk-Protokolls in einer Recheneinheit angesprochen. Bei dieser Recheneinheit kann es sich um die Recheneinheit der Notrufeinheit handeln, die als gemeinsame Recheneinheit sowohl die Abarbeitung des Mobilfunk-Protokolls als auch die Steuerung der Notruffunktion der Notrufeinheit, d.h. die Steuerung der übrigen Notrufeinheit, übernimmt. In diesem Fall handelt es sich um eine stark integrierte Notrufeinheit, die üblicher Weise die ihre Mobilfunkkommunikation nur im Rahmen der Notrufabsetzung einsetzt, aber nicht für andere Telematikanwendungen, bspw. ein zelluläres Fahrzeugtelefon, zur Verfügung stellt. Auf eine derartige Notrufeinheit mit einer gemeinsamen Recheneinheit bezieht sich die Erfindung vorrangig.

Grundsätzlich ist es jedoch auch möglich, das zelluläre Kommunikationsmodul mit einer eigenen Recheneinheit auszustatten, in welcher die Abarbeitung des Mobilfunk-Protokolls erfolgt. Die übrige Steuerung der Notrufeinheit geschieht dann durch die separate Recheneinheit der Notrufeinheit. Bei dieser Ausführungsform kann das zelluläre Kommunikationsmodul sinnvoller Weise auch anderen Telematikanwendungen zelluläre Mobilfunkkommunikation erlauben. Eine solche Notrufeinheit ist aufgrund der zwei Recheneinheiten teurer, aber auch universeller einsetzbar. Auch auf derartige Notrufeinheiten bezieht sich die vorliegende Erfindung.

Notrufmodule, die auch als eCall-Module bekannt sind, finden zunehmend Einsatz in modernen Fahrzeugen, um im Falle eines Unfalls schnell und zielgerichtet Hilfskräfte an den Unfallort zu schicken. Ferner ist geplant, eine derartige Notrufeinheit in einer harmonisierten, europäischen Variante als 112-eCall zum Standard für alle europäischen Fahrzeuge zu machen.

Allerdings sind die Kosten für eine eigene Notrufeinheit (eCall) gerade bei preiswerten Fahrzeugen relativ hoch, weil in der Notrufeinheit ein eigenständiges Kommunikationsmodul (NAD - Network Access Device) integriert ist, um eine Verbindung in das öffentliche Mobilfunknetz aufzubauen und den Notruf in diesem Netz abzusetzen. Um die Kosten für eine separate Notrufeinheit mit einem eigenständigen Kommunikationsmodul einzusparen, wird über eine Anbindung von mobilen Geräten (bspw. Mobiltelefonen oder dergl. Kommunikationsgeräte) über Bluetooth oder WLAN nachgedacht, die über die mobile Anbindung in das Fahrzeug-Kommunikationsnetz integriert und zur Absendung des Notrufs in ein externes Kommunikationsnetz, insbesondere das Mobilfunknetz, verwendet werden können. Jedoch ist bei einer Anbindung von mobilen Geräten zur Absetzung des Notrufs die Verfügbarkeit des Notrufs nach einem Unfall nicht immer gewährleitest, da das mobile Geräte bei einem Unfall aus dem Fahrzeug geschleudert oder zerstört werden kann. Auch kann das Modul zur Herstellung der drahtlosen Verbindung mit dem mobilen Gerät bspw. nicht mehr funktionieren, wenn die Stromversorgung des Moduls durch den Unfall unterbrochen ist.

Aus der WO 2009/074655 A1 ist eine Kommunikationseinrichtung für ein Fahrzeug zur drahtlosen Übertragung von Fahrzeug-relevanten Daten an ein anderes Fahrzeug oder an eine stationäre Infrastruktur bekannt, wobei die Kommunikationseinrichtungen zwei Kommunikationseinheiten mit jeweils einer Antenne aufweist, die für unterschiedliche Kommunikationswege geeignet sind. Gesteuert wird diese Kommunikationseinheit durch eine zentrale Steuereinheit (Mikroprozessor). An diese zentrale Steuereinheit sind auch weitere Fahrzeugeinheiten, wie bspw. eine Positionierungseinheit, eine Navigationseinheit, diverse Umfeldsensoren und dergl. angeschlossen. Durch die gemeinsame Nutzung einer zentralen Steuereinheit lassen sich die Kosten der jeweiligen Einheiten deutlich vermindern, da ein zentraler Prozessor bei der Herstellung und Konzeption des gesamten Fahrzeugsystems wesentlich günstiger ist, als eine Vielzahl von Einzelprozessoren, die auf die einzelnen Einheiten verteilt sind. Allerdings besteht das Problem, dass bei dem Ausfall des einen zentralen Prozessors die gesamte Fahrzeugelektronik ausfällt und auch sicherheitsrelevante Funktionen unter Umständen nicht mehr gewährleistet werden können.

Die GB 2 435 536 A offenbart ein Verfahren zur Nutzung der Recheneinheit einer Notrufeinheit gemäß dem Oberbegriff des Anspruchs 1.

Die DE 10 2008 013 748 A1 offenbart ein Notrufmodul einer Notrufeinheit, das von einem separaten Navigationsmodul mit einer GPS-Einheit Gebrauch macht. In einem völlig anderen Zusammenhang ist aus der US 2004/0199916 A1 ein Prozessor bekannt, der verschiedene Aufgaben parallel verarbeiten kann.

Aufgabe der Erfindung ist es, eine funktionssichere Notrufeinheit effizienter zu gestalten, in ein Fahrzeug zu integrieren und dabei die Kosten für das gesamte Elektroniksystem des Fahrzeugs zu minimieren.

Diese Aufgabe wird erfindungsgemäß mit einem Verfahren gemäß den Merkmalen des Anspruchs 1 und einer insbesondere zur Durchführung dieses Verfahrens eingerichteten Notrufeinheit entsprechend den Merkmalen des Anspruchs 10 gelöst.

Dabei ist vorgesehen, dass die Recheneinheit der Notrufeinheit in einem Normalmodus bestimmte Funktionen der Recheneinheiten der anderen Fahrzeugeinheiten übernimmt und die Funktionsergebnisse über das Fahrzeug-Kommunikationsnetz zur Verfügung stellt. Ferner schaltet die Notrufeinheit bei
dem Eintreten eines Gefahrenfalls, in welchem ein Notruf abgesetzt werden soll, in einen Notrufmodus und sendet den Notruf über das zelluläre Kommunikationsmodul aus. Das Eintreten des Gefahrenfalls kann, wie bereits heute üblich, bspw. durch das Auslösen aktiver Sicherheitseinrichtungen, wie das Zünden eines Airbags oder die Aktivierung eines Gurtstraffers, an die Notrufeinheit gemeldet werden, deren Recheneinheit daraufhin in den Notrufmodus schaltet und den Notruf aussendet. Damit kann die Notrufeinheit als autarke Einheit mit einer Recheneinheit und einem Kommunikationsmodul den Notruf auch dann noch aussenden, wenn die übrige Fahrzeug-Elektronik und das Fahrzeug-Kommunikationsnetz durch den Unfall beschädigt sind. Hierzu kann vorzugsweise eine geeignete Energiespeichereinheit, bspw. in Form eines kleinen Akkumulators oder einer Kondensatorschaltung, in der Notrufeinheit vorgesehen sein, die im Falle einer Trennung von der Fahrzeug-Energieversorgung ausreichend Energie zur Verfügung stellt, damit die Recheneinheit in den Notrufmodus schalten und die Notrufeinheit über das zelluläre Kommunikationsmodul den Notruf aussenden können.

Bei einer gemeinsamen Recheneinheit für das zelluläre Kommunikationsmodul und die Notrufeinheit wird gemäß einer bevorzugten Ausführungsform vorgeschlagen, dass die Recheneinheit im Normalmodus nicht zur Abarbeitung eines Mobilfunk-Protokolls eingerichtet ist. Damit steht den anderen Recheneinheiten eine erhebliche Rechenleistung zur Verfügung, da die Abarbeitung des Mobilfunk-Protokolls einen erheblichen Teil der Rechenleistung der gemeinsamen Recheneinheit kontinuierlich in Anspruch nimmt. Grundsätzlich schließt die Erfindung jedoch auch den Fall mit ein, dass eine gemeinsame Recheneinheit im Normalmodus zur Abarbeitung des Mobilfunk-Protokolls für das zelluläre Kommunikationsmodul eingerichtet ist und nur nicht für die Steuerung der Notfalleinheit (insbesondere Erkennen eines Signals für den Gefahrenfall und Vorbereitung eines Notruf-Telegramms in einem Gefahrenfall) eingerichtet ist. In diesem Fall ist der Effekt der Erfindung natürlich weniger ausgeprägt. Ähnliches gilt für den Fall separater Recheneinheiten für das zelluläre Kommunikationsmodul und die (übrige) Notrufeinheit, weil die Recheneinheit der übrigen Notfalleinheit dann in der Regel weniger leistungsfähig konzipiert ist.

Damit die Notrufeinheit besonders zuverlässig arbeitet, kann das Umschalten der Recheneinheit der Notrufeinheit in den Notrufmodus erfindungsgemäß durch einen Neustart des Prozessors der Recheneinheit und damit der Recheneinheit in einem dualen Bootmodus erfolgen, durch den der Prozessor bzw. die Recheneinheit programmtechnisch dazu eingerichtet wird, die zum Aussenden bzw. Absetzen eines Notrufs notwendigen Funktionen auszuführen. Dadurch wird vermieden, dass andere Funktionen der Recheneinheit den Prozessor zu stark belasten oder beeinträchtigen und sich die Aussendung eines Notrufs verzögert oder diese sogar ausfällt. Wenn der Prozessor der Recheneinheit in dem Notrufmodus ausschließlich zur Durchführung der für das Aussenden eines Notrufs und ggf. die Verarbeitung hierauf erfolgender Rückmeldungen eingerichtet ist, arbeitet die erfindungsgemäße Notrufeinheit besonders zuverlässig.

In einer bevorzugten Ausführungsform des erfindungsgemäßen Verfahrens kann der Neustart des Prozessors durch einen vorzugsweise hoch priorisierten Interrupt erfolgen, der einen Neustart des Prozessors unmittelbar im Notrufmodus erzwingt. Hierzu kann durch den Interrupt vor dem Neustart des Prozessors bzw. der Recheneinheit noch eine entsprechende Boot-Flag gesetzt werden, die für ein unverzügliches booten des Prozessors in dem Notrufmodus sorgt.

Erfindungsgemäß kann der Neustart des Rechners aus dem Normalmodus in den Notrufmodus ohne vorherige Beendigung der in dem Normalmodus auf dem Prozessor bzw. der Recheneinheit ablaufenden Prozesse bspw. durch Unterbrechung der Stromzufuhr erfolgen, so dass Zwischenergebnisse der auf dem Prozessor ablaufenden Funktionen vor dem Neustart nicht zwischengespeichert werden. Daher ist es erfindungsgemäße vorteilhaft, die Funktionen in dem Normalmodus derart zu programmieren, dass Zwischenergebnisse mit hoher Frequenz abgespeichert werden und der Prozessor im Normalmodus bei Wideraufnahme der Funktionen auf die abgespeicherten Werte zugreift. Hierdurch wird ein signifikanter Informationsverlust durch den unmittelbaren Neustart des Prozessors in den Notrufmodus vermieden. Dies kann bspw. in einem internen, nicht-flüchtigen Speicher der Notrufeinheit erfolgen, auf den die Recheneinheit und vorzugsweise auch das Kommunikationsmodul zugreifen können.

Die Recheneinheit der Notrufeinheit kann bei Aktivierung des Notrufmodus unmittelbar auch das zelluläre Kommunikationsmodul aktivieren, das nach Herstellung einer Kommunikationsverbindung mit dem öffentlichen Mobilfunknetz den Notruf absetzt. Dies erfolgt gemäß der derzeit üblichen Technologie durch Anmeldung der SIM-Karte in dem Mobilfunknetz, ohne dass die Erfindung jedoch auf diese konkrete Aktivierung des Netzzugangs beschränkt wäre. Da der Neustart des Prozessors der Recheneinheit unmittelbar mit der für die Absetzung des Notrufs vorgesehenen Software erfolgt, die daher keinen großen Funktionsumfang aufweist, geht der Neustart des Prozessors sehr schnell, so dass durch den Neustart des Prozessors keine nennenswerte Zeitverzögerung auftritt, insbesondere im Vergleich zu einem Prozessor, bei dem vor Absendung eines Notrufs gestartete Prozesse beendet werden müssen.

Das Absetzen des Notrufs lässt sich erfindungsgemäß dadurch weiter beschleunigen, dass notwendige Informationen, insbesondere die Position des Fahrzeugs, die bspw. durch ein satellitenbasierten Ortungssystems ermittelt werden kann, im Normalmodus der Recheneinheit periodisch in einem nicht-flüchtigen Speicher der Rechen- oder Notrufeinheit abgelegt werden, auf welchen die Recheneinheit im Notrufmodus zum Absetzen des Notrufs zugreift. Die periodische Abspeicherung der Fahrzeugposition oder sonstiger, für die Absetzung des Notrufs notwendiger Information kann fest vorgegeben sein und bspw. in einem Bereich von 5 bis 30 Sekunden liegen. Es ist auch möglich, die Periodizität der periodischen Speicherung unter Berücksichtigung der Position des Fahrzeugs, seiner Geschwindigkeit und/oder anderer Umweltbedingungen anzupassen, so dass die Recheneinheit im Normalmodus möglichst wenig belastet wird und für den Notruf ausreichend aktuelle Informationen zur Verfügung stehen.

Eine weitere Beschleunigung der Absetzung des Notrufs lässt sich für die Ausführungen der Erfindung, bei denen zwei Recheneinheiten für das zelluläre Kommunikationsmodul und die Notrufeinheit vorgesehen sind oder die gemeinsame Recheneinheit auch im Normalmodus zur Abarbeitung des Mobilfunk-Protokolls eingerichtet ist/bleibt, erfindungsgemäß dadurch erreichen, dass die Recheneinheit im Normalmodus das zelluläre Kommunikationsmodul im Mobilfunknetz anmeldet und periodisch eine Identifikation der aktuellen Mobilfunknetzzelle in einem nichtflüchtigen Speicher der Recheneinheit abgelegt wird, auf welche das zelluläre Kommunikationsmodul beim Anmelden in das Mobilfunknetz im Notrufmodus, vorzugsweise aber auch im Normalmodus zugreift. Hierdurch kann die Suche nach einer geeigneten Mobilfunknetzzelle während des Anmeldevorgangs erheblich beschleunigt werden, so dass diese besonders zügig erfolgen kann.

Um das Anmelden des zellulären Kommunikationsmoduls an dem öffentlichen Mobilfunknetz auch der vorrangigen Anwendungsform der Erfindung zu beschleunigen, bei der die gemeinsame Recheneinheit der Notrufeinheit und der zellulären Mobilfunkeinheit im Normalmodus nicht zur Abarbeitung des Mobilfunk-Protokolls eingerichtet sind, kann in der Recheneinheit der Notrufeinheit, insbesondere in dem zellulären Kommunikationsmodul bzw. diesem zugeordnet, eine Karte vorgehalten werden, in welcher Positionen eines satellitenbasierten Ortungssystems und zugehörige Identifikationen von Mobilfunknetzzellen gespeichert sind. Auf diese Identifikationen der Mobilfunknetzzellen kann das zelluläre Kommunikationsmodul in Kenntnis der Position in den Koordinaten des satellitenbasierten Ortungssystems beim Anmelden im Mobilfunknetz gezielt zugreifen. Hierdurch kann das Kommunikationsmodul der Notrufeinheit bei der Registrierung schneller feststellen, in welcher Mobilfunkzelle sich die Notrufeinheit und damit das Kommunikationsmodul befinden. Dabei können auch Gruppen von Funkzellen gebildet werden, die größeren Positionsbereichen zugewiesen sind, falls die einzelnen Zellen zu klein sind und damit die Größe der die Karte abbildenden Datenbank reduziert werden muss, um keinen zusätzlichen Speicher in der Recheneinheit zu benötigen. So könnten bspw. 10 Zellen zu einer Position rückgemeldet werden, so dass das Kommunikationsmodul beim Anmelden in dem Mobilfunknetz nur noch unter diesen 10 Zellen suchen muss, in welcher der Mobilfunkzellen es sich tatsächlich befindet. Über dieses Verfahren kann die Zeit zum Anmelden der heute üblichen SIM-Karten im Mobilfunknetz deutlich reduziert werden. Natürlich kann dieses Verfahren auch mit dem vorgenannten Verfahren kombiniert werden, bei dem die Identifikationen der aktuellen Mobilfunkzellen gespeichert werden, sofern das zelluläre Kommunikationsmodul im Mobilfunknetz aktuell eingemeldet ist.

Um die Zeit bis zur Aussendung eines Notrufs im Falle eines Gefahrenfalls weiter zu verkürzen, kann das Umschalten in den Notrufmodus erfindungsgemäß bereits bei dem Erkennen einer Gefahrensituation durch ein Fahrerassistenzsystem des Fahrzeugs bspw. aufgrund von C2C-Kommunikation, C2X-Kommunication oder Umfeldsensoren, eingeleitet werden. Dies hat den Vorteil, dass die Notrufeinheit bereits vor Eintritt des Gefahrenfalls, der bspw. durch das Auslösen einer Airbag-Steuerung erkannt wird, in einer erkannten Gefahrensituation auf das Aussenden eines Notrufs vorbereitet wird und die Notrufeinheit den Notruf dann nach Eintritt des Gefahrenfalls noch schneller aussenden kann.

Ferner ist es erfindungsgemäß vorteilhaft, wenn die Recheneinheit in Normalmodus keine sicherheitsrelevanten Funktionen und Anwendungen ausführt, sondern nur Funktionen und Anwendungen, die nicht sicherheitskritisch sind und insbesondere nicht dem Schutz von Leib und Leben dienen. Dadurch wird sichergestellt, dass im Falle des Absetzens eines Notrufs nur solche Funktionen und Anwendungen ausfallen, die in einem solchen Fall nicht mehr wichtig sind bzw. deren fehlen nicht stört. Der Ausfall dieser Funktionen ist unvermeidlich, da der in der Recheneinheit der Notrufeinheit vorgesehene Prozessor in dem Notrufmodus arbeitet und die im Normalmodus ausgeführten Funktionen daher nicht mehr zur Verfügung stehen. Geeignete Funktionen und Anwendungen, die im Normalmodus auf dem Prozessor der Recheneinheit einer Notrufeinheit ausgeführt werden können, sind Routing-Aufgaben für eine einfache Navigation, eine Spracherkennung für die Sprachsteuerung des Fahrzeugs, ein Bordcomputer mit Funktionen wie Benzinverbrauch, Restkilometer, usw., Funktionen zur Aggregation von Sensordaten zum Erstellen von C2X-Botschaften oder Verkehrsinformationen aufbauend auf den aggregierten Sensordaten, Abarbeitungen von Internetfunktionen für den Fall, dass der Internetzugang über eine andere Technologie erfolgt, wie bspw. WLAN, WiMax, Bluetooth, ZigBee, usw., Musikempfang bzw. klassischer Radioempfang für ein Software-defined-Radio, Dekodierung von komprimierten Medienformaten wie MP3, Verbesserung des Musikanlagenklangs durch Surround-Sound, Regelung der Klimaanlage, Reifendrucküberwachung (TPMS-Funktionen - Tire Pressure Monitoring) und dgl..

Ferner bezieht sich die vorliegende Erfindung auf eine Notrufeinheit mit einem zellulären Kommunikationsmodul, insbesondere für GSM, UMTS oder dergl. öffentliche Mobilfunknetze, zum Absetzen eines Notrufs in ein öffentliches Mobilfunknetz und einem Anschluss an ein Fahrzeug-Kommunikationsnetz zur Kommunikation bzw. zum Datenaustausch mit anderen Fahrzeugeinheiten sowie mit einer Recheneinheit, welche zur Durchführung des vorbeschriebenen Verfahrens oder Teilen hiervon durch geeigneten Programmierung eingerichtet ist. Die Recheneinheit kann eine gemeinsame Recheneinheit der Notrufeinheit und des zellulären Kommunikationsmoduls oder eine Recheneinheit nur der Notrufeinheit sein. In letzterem Fall weist das zelluläre Kommunikationsmodul eine separate Recheneinheit auf, die zur Abarbeitung des Mobilfunk-Protokolls (bspw. UMTS-Protokoll) eingerichtet ist. Andernfalls ist die gemeinsame Recheneinheit mit zur Abarbeitung des Mobilfunk-Protokolls eingerichtet. Die Erfindung bezieht sich auch auf geeignete Programmmittel zum Einrichten der Recheneinheit einer Notrufeinheit (sowohl einer gemeinsamen als auch einer nur der Notrufeinheit zugeordneten Recheneinheit) für die Durchführung des vorbeschriebenen Verfahrens.

Weitere Merkmale, Vorteile und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: schematisch eine erfindungsgemäße Notrufeinheit, die in ein Fahrzeug-Kommunikationsnetz integriert ist, und
- Fig. 2: schematisch den Ablauf des erfindungsgemäßen Verfahrens zur Nutzung der Recheneinheit einer Notrufeinheit entsprechend Fig. 1.

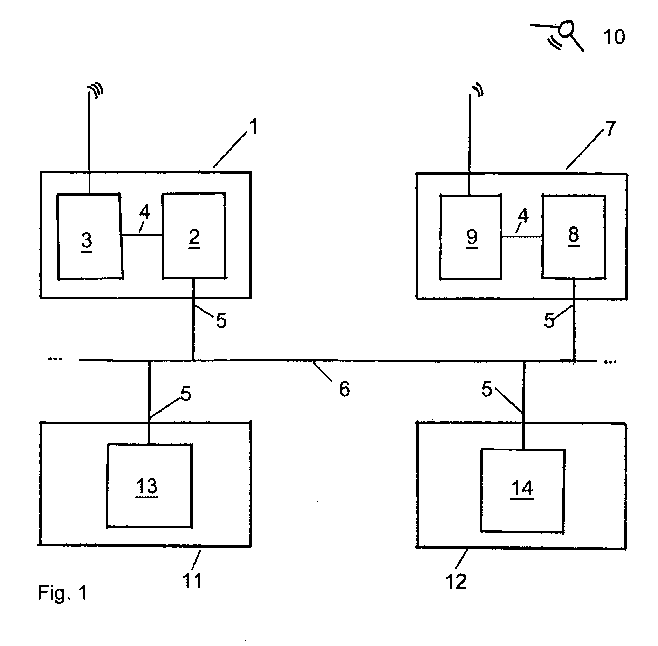

Die in Fig. 1 schematisch dargestellte Notrufeinheit 1 weist eine Recheneinheit 2 und ein zelluläres Kommunikationsmodul 3 auf, das zur Kommunikation mit einem öffentlich zur Verfügung stehenden Kommunikationsnetz, bspw. GSM, UMTS oder dergl., eingerichtet und ausgestattet ist. Die Recheneinheit 2 und das zelluläre Kommunikationsmodul 3 sind über eine interne Kommunikationsverbindung 4 verbunden, so dass die Recheneinheit 2 eine gemeinsame Recheneinheit 2 des Kommunikationsmoduls 3 und der Notrufeinheit 1 ist. Die gemeinsame Recheneinheit 2 ist daher zur Abarbeitung des Mobilfunk-Protokolls als zur Steuerung der übrigen Notrufeinheit eingerichtet, um im Gefahrenfall einen Notruf auszusenden.

In einer alternativen, hier nicht dargestellten Ausführung können sowohl die Recheneinheit 2 als auch das zelluläre Kommunikationsmodul 3 weisen eine eigene Recheneinheit aufweisen, die mittels Datenverarbeitungsprogrammen zur Ausführung vorgegebener Verfahren und Funktionen eingerichtet ist, insbesondere zur Abarbeitung des Mobilfunk-Protokolls im Falle der Recheneinheit des zellulären Kommunikationsmoduls 3.

Vorzugsweise weisen die Recheneinheit 2 und das zelluläre Kommunikationsmodul 3 auch jeweils einen eigenen oder vorzugsweise einen gemeinsamen internen Speicher 15 auf. Dieser in Fig. 1 nicht dargestellte interne Speicher 15 ist als nicht-flüchtiger Speicher ausgebildet, d.h. sein Inhalt steht auch nach einem Neustart der Recheneinheit noch zur Verfügung.

Über einen Anschluss 5, der durch ein eigenes Netzwerkmodul oder ein in die Recheneinheit 2 integriertes Netzwerkmodul realisiert sein kann, ist die Notrufeinheit 1 an ein Fahrzeug-Kommunikationsnetz 6 angeschlossen, das ein kabelgebundenes oder drahtloses Bussystem (CAN, MOST), ein WLAN-Netz oder ein Bluetooth-Netz sein kann. An das Fahrzeug-Kommunikationsnetz 6 sind weitere Funktionseinheiten des Fahrzeugs angeschlossen. Dabei kann es sich um ein satellitenbasiertes Ortungssystem 7 mit einer Recheneinheit 8 und einem Satellitenempfänger 9 handeln, wobei der Satellitenempfänger 9 Ortungssignale von Satelliten 10 empfangen kann. Das satellitenbasierte Ortungssystem 7 kann bspw. das GPS- oder Galileo-System oder ein sonstiges Ortungssystem sein, welches Ortungssignale von Satelliten empfängt. Die Recheneinheit 8 und der Satellitenempfänger 9 des satellitenbasierten Ortungssystems 7 sind über eine interne Kommunikationsverbindung 4 miteinander verbunden.

Die Recheneinheit 8 des satellitenbasierten Ortungssystems 7 ist insbesondere zum Empfangen von Ortungssignalen sowie zur Auswertung der empfangenen Satellitensignale und Bestimmung der jeweils aktuellen Fahrzeugposition eingerichtet. Ferner kann die Recheneinheit 8 zur Durchführung von Navigationsaufgaben eingerichtet sein.

Weiter sind jeweils über Anschlüsse 5 ein Fahrerassistenzsystem 11 und ein Fahrzeug-Bordsystem 12 an das Fahrzeug-Kommunikationsnetz 6 angeschlossen.

Die Recheneinheit 13 des Fahrerassistenzsystems 11 ist zur Durchführung von Fahrerassistenzfunktionen eingerichtet, die bspw. durch nicht dargestellte Fahrzeug- oder Umfeldsensoren oder C2X- oder C2C-Kommunikation Gefahrensituationen des Fahrzeugs erkennen und an ein nicht dargestelltes Fahrzeug-Display zur Information des Fahrers sendeen. Das Fahrerassistenzsystem 11 kann auch zum unmittelbaren Eingriff in Fahrzeugfunktionen, bspw. zur Durchführung einer Notbremsung, eingerichtet sein und Gefahrenmeldungen über das Fahrzeug-Kommunikationsnetz 6 an alle weiteren Teilnehmer aussenden.

Das Fahrzeug-Bordsystem 12 weist eine Recheneinheit 14 auf, die zur Anzeige von Informationen wie aktuellem Benzinverbrauch, Durchschnittsverbrauch, Durchschnittsgeschwindigkeit, Temperatur in der Fahrzeugumgebung, etc. eingerichtet ist.

Ferner kann in das Fahrzeug-Bordsystem 12 die externe Kommunikationssteuerung für ein in das Fahrzeug integrierte Fahrzeugtelefone oder dergl. übernehmen. Für die Wahrnehmung der Kommunikationsverbindung kann das Fahrzeug-Bordsystem mit einem eigenen zellulären Kommunikationsmodul ausgestattet sein.

Wenn die zelluläre Mobilfunkeinheit dagegen - abweichend von dem hier dargestellten Falle - eine eigene Recheneinheit aufweist oder die gemeinsame Recheneinheit in jedem Betriebsmodus zur Abarbeitung des Mobilfunk-Protokolls eingerichtet bleibt, wäre es vorteilhaft, wenn das Fahrzeug-Bordsystem 12 zur normalen Telefon-Kommunikation auf das zelluläre Kommunikationsmodul 3 der Notrufeinheit 1 zugreift, wenn diese im Normalmodus betrieben wird.

Die Recheneinheit 2 der Notrufeinheit 1 ist dazu eingerichtet, in einem Normalmodus bestimmte Funktionen der Recheneinheiten 8, 13, 14 der anderen Fahrzeugeinheiten (satellitenbasiertes Ortungssystem 7, Fahrerassistenzsystem 11, Fahrzeug-Bordsystem 12) zu übernehmen und die Funktionsergebnisse über das Fahrzeug-Kommunikationsnetz 6 den jeweiligen Fahrzeugeinheiten 7, 11, 12 zur Verfügung zu stellen. In diesem Normalmodus ist die Recheneinheit nicht zur Abarbeitung des Mobilfunk-Protokolls oder Steuerung der übrigen Notrufeinheit eingerichtet. Es können in diesem Normalmodus also weder ein Notfalltelegramm auf eine Gefahrenmeldung hin erzeugt noch eine Mobilfunkkommunikation durchgeführt werden.

Bei Eintreten eines Gefahrenfalls, in welchem ein Notruf abgesetzt werden soll, schaltet die Recheneinheit 2 der Notrufeinheit 1 dagegen in einen Notrufmodus und sendet den Notruf über das zelluläre Kommunikationsmodul 3 aus. In diesem Notrufmodus ist die gemeinsame Recheneinheit 2 der Notrufeinheit 1 also zur Abarbeitung des Mobilfunk-Protokolls oder Steuerung der übrigen Notrufeinheit eingerichtet.

Um nicht auf die Fahrzeug-Energieversorgung angewiesen zu sein, ist die Notrufeinheit 1 vorzugsweise mit einer nicht dargestellten, zumindest temporären Energieversorgung (Akkumulator, Superkondensator oder dergl.) ausgestattet, um nach dem Empfang einer Gefahrenmeldung über das Fahrzeug-Kommunikationsnetz 6 autark zu arbeiten, d.h. den Notrufmodus zu aktivieren und den Notruf über das zelluläre Kommunikationsmodul 3 auszusenden, ohne auf andere Fahrzeugeinheiten oder die Fahrzeug-Energieversorgung zugreifen zu müssen.

Im Normalmodus kann die Recheneinheit 2 der Notrufeinheit 1 dagegen rechenintensive, aber vorzugsweise nicht sicherheitsrelevante Aufgaben und Funktionen der anderen Recheneinheiten 8, 13, 14 übernehmen. Im Falle des satellitenbasierten Ortungssystems 7 kann die Recheneinheit 2 der Notrufeinheit 1 bspw. dazu eingerichtet sei, bei der Aktivierung einer Navigation die bevorzugte Streckenführung zu berechnen, da dieser Vorgang sehr rechenintensiv ist und die Recheneinheit 8 das satellitenbasierten Ortungssystems 7 stark belastet.

Weitere Funktionen können die Darstellung bestimmter Fahrzeugzustände durch das Fahrzeug-Bordsystem 12 sein, die anstelle der Recheneinheit 14 auch durch die Recheneinheit 2 vorgenommen werden können. Auch das Fahrerassistenzsystem 11 kann vorzugsweise nicht sicherheitsrelevante Funktionen aus seiner Recheneinheit 13 in die Recheneinheit 2 der Notrufeinheit auslagern, solange sich diese im Normalmodus befindet.

Sobald die Notrufeinheit 1 über das Fahrzeug-Kommunikationsnetz 6 bspw. von dem Fahrerassistenzsystem 11 eine Gefahrenmeldung (wie das Auslösen einer Airbagsteuerung) erhält, die das Aussenden eines Notrufs erfordert, schaltet die Recheneinheit 2 der Notrufeinheit 1 automatisch in den Notrufmodus, in welchem die Recheneinheit 2 respektive der in der Recheneinheit 2 vorhandene Prozessor ausschließlich zur Aussendung des Notrufs und der damit in Verbindung stehenden Funktionen eingerichtet ist.

Vorzugsweise kann das Umschalten der Recheneinheit 2 in den Notrufmodus durch einen Neustart des Prozessors der Recheneinheit 2 in einem dualen Bootmodus erfolgen. Da der Funktionsumfang der auszuführenden Funktionen der Recheneinheit 2 in dem Notrufmodus begrenzt ist, lässt sich ein Neustart des Prozessors sehr schnell bewerkstelligen. Darüber hinaus bietet ein neugestarteter Prozessor den Vorteil, dass die eingerichteten Funktionen stabil sind und die Recheneinheit 2 unmittelbar nach dem Neustart sehr zuverlässig arbeitet. Dies ist für die Absendung eines Notrufs besonders wichtig.

Idealerweise ist die Recheneinheit 2 im Normalmodus zur Ausführung eines Portierungs-, Partionierungs- bzw. Anwendungsverschiebungs-Programms einrichtet, mit dem eine flexible Nutzung von Recheneinheiten und deren Speicherplatz sowie eine Verschiebung von Anwendungen (Programmen) auf andere Recheneinheiten möglich ist. Ein Beispiel für ein derartiges Programm ist AUTOSAR. Im Notfallmodus wird ein derartiges Programm nicht benötigt und daher in dem dualen Bootmodus erfindungsgemäß nicht installiert.

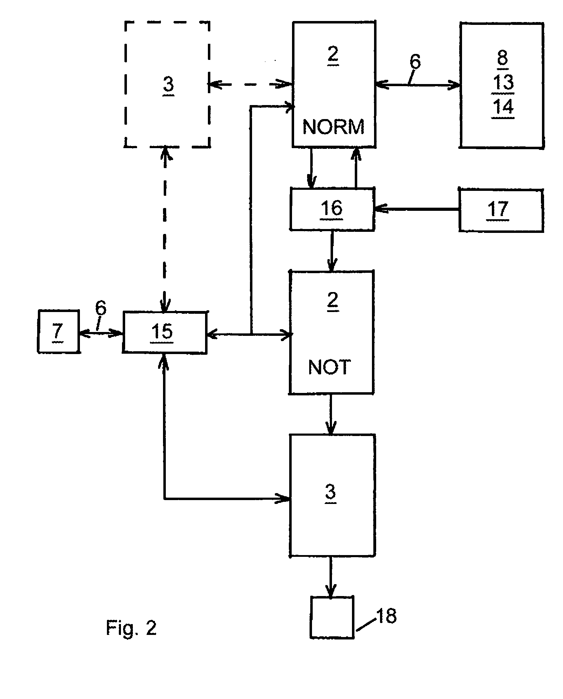

Anhand von Fig. 2 wird ein möglicher Ablauf des erfindungsgemäßen Verfahrens zur Nutzung der Recheneinheit 2 der Notrufeinheit 1 in einem Normalmodus und einem Notrufmodus beispielhaft beschrieben. Es wird jedoch darauf hingewiesen, dass dies nur eine vorteilhafte Ausgestaltung des erfindungsgemäßen Verfahrens darstellt und die Erfindung nicht auf die konkret gezeigte Umsetzung beschränkt ist.

Fig. 2 stellt oben in der Mitte die Recheneinheit 2 der Notrufeinheit 1 im Normalmodus dar, was durch den Begriff "NORM" symbolisiert ist. In diesem Normalmodus kommuniziert die Recheneinheit 2 mit den Recheneinheiten 8, 13 und 14 der weiteren Fahrzeugeinheiten 7, 11, 12, um bestimmte, nicht-sicherheitsrelevante Rechenaufgaben dieser Funktionseinheiten 7, 11, 12 zu übernehmen.

Da die Recheneinheit 2 jederzeit aus dem Normalmodus in den Notrufmodus umgeschaltet werden kann, ohne zuvor Rechenergebnisse zur speichern, kann erfindungsgemäß vorgesehen sein, dass die Recheneinheit 2 Zwischenergebnisse bei der Berechnung bestimmter Funktionen für die anderen Recheneinheiten 8, 13, 14 in einen nichtflüchtigen, internen Speicher 15 zwischenspeichert, der bspw. in die Recheneinheit 2 integriert sein kann. Diese Zwischenergebnisse der Berechnung stehen dann nach Rückkehr der Recheneinheit 2 aus dem Notrufmodus in den Normalmodus wieder zur Verfügung und helfen, das Fahrzeugsystem insgesamt in einem definierten Zustand wiederzufinden.

Optional kann, wenn anders als in dem in Fig. 1 beschriebenen Fall das zelluäre Mobilfunkmodul 3 eine eigene zur Abarbeitung des Mobilfunk-Protokolls eingerichtete Recheneinheit aufweist oder die gemeinsame Recheneinheit 2 auch im Normalmodus zur Abarbeitung des Mobilfunk-Protokolls eingerichtet bleibt, die Recheneinheit 2 im Normalmodus das zelluläre Kommunikationsmodul 3 im Mobilfunknetz auch dann anmelden, wenn in dem Fahrzeug keine normale Telefonfunktion vorgesehen ist. Dies ist in der gestrichelten Variante oben links in Fig. 2 dargestellt, die bei der vorrangigen Ausführungsform der Erfindung allerdings nicht zur Verfügung steht.

In dieser optionalen Ausführung legen das zelluläre Kommunikationsmodul 3 oder die Recheneinheit 2 dann periodisch eine Identifikation der aktuellen Mobilfunknetzzelle in dem nichtflüchtigen Speicher 15 ab, auf welche das zelluläre Kommunikationsmodul 3 beim Anmelden in das Mobilfunknetz insbesondere im Notrufmodus, ggf. aber auch im Normalmodus zugreifen kann. Hierdurch wird die Anmeldung im Mobilfunknetz erheblich beschleunigt.

Ferner kann das satellitenbasierte Ortungssystem 7 - sowohl in der optionalen als auch in der vorrangigen Ausführung der Erfindung - über das Fahrzeug-Kommunikationsnetz 6 die aktuelle Positionsinformation des Fahrzeugs im Normalmodus der Recheneinheit 2 periodisch in dem nichtflüchtigen Speicher 15 der Recheneinheit 2 ablegen, auf welche die Recheneinheit 2 respektive das zelluläre Kommunikationsmodul 3 im Notrufmodus zum Absetzen des Notrufs zugreifen können. Somit steht im Falle eines Notrufs die aktuelle Position des Fahrzeugs besonders schnell zur Verfügung. Im Normalmodus kann das Speichern der Fahrzeugposition bspw. alle 5 Sekunden oder auch bewegungsabhängig erfolgen.

Es wird darauf hingewiesen, dass die Darstellung in Fig. 2, wonach das satellitenbasierte Ortungssystem 7 über das Fahrzeug-Kommunikationsnetz 6 unmittelbar auf den nicht-flüchtigen, internen Speicher 15 schematisch ist und nicht bedeutet, dass diese Kommunikation unmittelbar und ohne Zugriff auf die Recheneinheit 2 erfolgt.

Somit liegen in dem nichtflüchtigen Speicher 15 alle wichtigen und notwendigen Informationen vor, die bei der Absetzung eines Notrufs notwendig sind bzw. das Absetzen des Notrufs erheblich beschleunigen.

Im Normalmodus prüft die Recheneinheit 2 über einen hochpriorisierten Interrupt 16 laufend, ob eine Gefahrenmeldung 17 bspw. von dem Fahrerassistenzsystem 11 vorliegt, die das Aussenden eines Notrufs erfordert. In diesem Fall unterbricht der Interrupt 16, der als Hardware oder als Software in der Recheneinheit 2 ausgebildet sein kann, einfacherweise unmittelbar die Stromversorgung nach Setzen einer Notruf-Flag, so dass die Recheneinheit 2 nach Wiederherstellung der Stromversorgung unmittelbar in dem Notrufmodus startet.

Die Recheneinheit 2 aktiviert im Notrufmodus NOT unmittelbar das zelluläre Kommunikationsmodul 3, das nach Herstellung einer Kommunikationsverbindung mit dem öffentlichen Mobilfunknetz sofort den Notruf 18 absetzt. Dabei greifen die Recheneinheit 2 und/oder das zelluläre Kommunikationsmodul 3 auf den internen, nicht flüchtigen Speicher 15 zu, in dem die aktuelle Position des Fahrzeugs und vorzugsweise auch eine Identifikation der aktuellen Mobilfunknetzzelle abgelegt sind. Die Identifikation der aktuellen Mobilfunkzelle ermöglicht dem zellulären Kommunikationsmodul 3 eine besonders schnelle Anmeldung in dem Mobilfunknetz.

Durch das Zwischenspeichern der aktuellen Fahrzeugposition in dem internen, nichtflüchtigen Speicher 15 steht auch die aktuelle Fahrzeugposition zur Verfügung, ohne dass die Notrufeinheit 1 in einem Notfall auf eine funktionierende Kommunikation mit dem satellitenbasierten Ortungssystem 7 über das Fahrzeug-Kommunikationsnetz 6 angewiesen wäre. Daher kann das Aussenden des Notrufs gemäß dem erfindungsgemäß vorgesehenen Verfahren losgelöst und autark von den weiteren Fahrzeugfunktionen erfolgen. Dies ist wichtig, da bspw. im Falle eines schweren Unfalls das Fahrzeug-Kommunikationsnetz 6 gestört sein kann.

Die vorliegende Erfindung stellt somit ein besonders zuverlässig und sicher arbeitendes Notrufsystem zur Verfügung, das darüber hinaus besonders kostengünstig in das Fahrzeug-Rechensystem integriert werden kann, weil die teuer benötigte Rechenleistung der Recheneinheit 2 der Notfalleinheit 1 überwiegend für weitere Rechenaufgaben in dem Fahrzeug genutzt werden kann und damit die anderen Recheneinheiten 8, 13, 14 der Fahrzeugeinheiten 7, 11, 12 entlastet. Diese können somit geringer dimensioniert werden, was einen erheblichen Preisvorteil zur Folge hat.

Die Erfindung ist, wie bereits erwähnt, nicht auf das in den Fig. 1 und 2 konkret dargestellte Ausführungsbeispiel beschränkt und kann an beliebige Fahrzeuginstallationen angepasst werden.

### Bezugszeichenliste:

- 1: Notrufeinheit
- 2: Recheneinheit
- 3: zelluläres Kommunikationsmodul
- 4: interne Kommunikationsverbindung
- 5: Anschluss
- 6: Fahrzeug-Kommunikationsnetz
- 7: satellitenbasiertes Ortungssystem
- 8: Recheneinheit
- 9: Satellitenempfänger
- 10: Satellit
- 11: Fahrerassistenzsystem
- 12: Fahrzeug-Bordsystem
- 13: Recheneinheit
- 14: Recheneinheit
- 15: interner Speicher
- 16: Interrupt
- 17: Gefahrenmeldung
- 18: Notruf

## Patentansprüche

1. Verfahren zur Nutzung der Recheneinheit (2) einer Notrufeinheit (1), die ein zelluläres Kommunikationsmodul (3) zum Absetzen eines Notrufs in ein öffentliches Mobilfunknetz aufweist und über ein Fahrzeug-Kommunikationsnetz (6) mit anderen Fahrzeugeinheiten (7, 11, 12) verbunden ist, die jeweils eine Recheneinheit (8, 13, 14) aufweisen, **dadurch kennzeichnet, dass** die Recheneinheit (2) der Notrufeinheit (1) in einem Normalmodus bestimmte Funktionen der Recheneinheiten (8, 13, 14) der anderen Fahrzeugeinheiten (7, 11, 12) übernimmt und die Funktionsergebnisse über das Fahrzeug-Kommunikationsnetz (6) zur Verfügung stellt und dass die Recheneinheit (2) der Notrufeinheit (1) bei Eintreten eines Gefahrenfalls, in welchem ein Notruf abgesetzt werden soll, in einen Notrufmodus schaltet und den Notruf über das zelluläre Kommunikationsmodul (3) aussendet.

2. Verfahren nach Anspruch 1, **dadurch gekennzeichnet, dass** das Umschalten der Recheneinheit (2) in den Notrufmodus durch einen Neustart des Prozessors in einem dualen Bootmodus erfolgt.

3. Verfahren nach Anspruch 2, **dadurch gekennzeichnet, dass** der Neustart des Prozessors durch einen Interrupt erfolgt, der einen Neustart des Prozessors unmittelbar im Notrufmodus erzwingt.

4. Verfahren nach einem der vorhergehenden Ansprüche, **dadurch gekennzeichnet, dass** die Recheneinheit (2) bei Aktivierung des Notrufmodus unmittelbar das zelluläre Kommunikationsmodul (3) aktiviert und nach Herstellung einer Kommunikationsverbindung mit dem öffentlichen Mobilfunknetz den Notruf absetzt.

5. Verfahren nach einem der vorhergehenden Ansprüche, **dadurch gekennzeichnet, dass** für das Absetzen des Notrufs notwendige Informationen, insbesondere die Position des Fahrzeugs, im Normalmodus der Recheneinheit (2) periodisch in einem nichtflüchtigen Speicher (15) der Recheneinheit (2) abgelegt wird, auf welchen die Recheneinheit (2) im Notrufmodus zum Absetzen des Notrufs zugreift.

6. Verfahren nach einem der vorhergehenden Ansprüche, **dadurch gekennzeichnet, dass** die Recheneinheit (2) im Normalmodus das zelluläre Kommunikationsmodul (3) im Mobilfunknetz anmeldet und periodisch eine Identifikation der aktuellen Mobilfunknetzzelle in einem nicht-flüchtigen Speicher (15) abgelegt wird, auf welche das zelluläre Kommunikationsmodul (3) beim Anmelden in das Mobilfunknetz im Notrufmodus zugreift.

7. Verfahren nach einem der vorhergehenden Ansprüche, **dadurch gekennzeichnet, dass** in der Recheneinheit (2) und/oder dem Kommunikationsmodul (3) eine Karte vorgehalten wird, in welcher Positionen eines satellitenbasierten Ortungssystems zugehörige Identifikationen von Mobilfunknetzzellen gespeichert sind und auf welche das zelluläre Kommunikationsmodul (3) beim Anmelden im Mobilfunknetz zugreift.

8. Verfahren nach einem der vorhergehenden Ansprüche, **dadurch gekennzeichnet, dass** das Umschalten in den Notrufmodus bei dem Erkennen einer Gefahrensituation durch ein Fahrerassistenzsystem (11) des Fahrzeugs eingeleitet wird.

9. Verfahren nach einem der vorhergehenden Ansprüche, **dadurch gekennzeichnet, dass** die Recheneinheit (2) im Normalmodus keine sicherheitsrelevanten Funktionen ausführt.

10. Notrufeinheit mit einem zellulären Kommunikationsmodul (3) zum Absetzen eines Notrufs in ein öffentliches Mobilfunknetz und einem Anschluss an ein Fahrzeug-Kommunikationsnetz (6) zur Kommunikation mit anderen Fahrzeugeinheiten (7, 11, 12) sowie einer Recheneinheit (2), **dadurch gekennzeichnet, dass** die Recheneinheit (2) zur Durchführung des Verfahrens nach einem der Ansprüche 1 bis 9 eingerichtet ist.

## Claims

1. Method for using the computing unit (2) of an emergency call unit (1) which has a cellular communication module (3) for transmitting an emergency call into a public mobile radio network and is connected via a vehicle communication network (6) to other vehicle units (7, 11, 12) which each have a computing units (8, 13, 14), **characterized in that** in a normal mode the computing unit (2) of the emergency call unit (1) takes over specific functions of the computing units (8, 13, 14) of the other vehicle units (7, 11, 12) and makes available the functional results via the vehicle communication network (6), and **in that** when a hazardous situation occurs in which an emergency call is to be transmitted, the computing unit (2) of the emergency call unit (1) switches into an emergency call mode and emits the emergency call via the cellular communication module (3).

2. Method according to Claim 1, **characterized in that** the computing unit (2) is switched over into the emergency call mode by a restart of the processor in a dual boot mode.

3. Method according to Claim 2, **characterized in that** the restart of the processor is carried out by means of an interrupt which forces a restart of the processor directly in the emergency call mode.

4. Method according to one of the preceding claims, **characterized in that** when the emergency call mode is activated, the computing unit (2) directly activates the cellular communication module (3), and after a communication link to the public mobile radio network has been established, it transmits the emergency call.

5. Method according to one of the preceding claims, **characterized in that** in the normal mode of the computing unit (2), information which is necessary for the transmission of the emergency call, in particular the position of the vehicle, is stored periodically in a nonvolatile memory (15) of the computing unit (2), which memory (15) is accessed by the computing unit (2) in the emergency call mode in order to transmit the emergency call.

6. Method according to one of the preceding claims, **characterized in that** in the normal mode, the computing unit (2) signs on the cellular communication module (3) in the mobile radio network, and an identifier of the current mobile radio network cell is periodically stored in a nonvolatile memory (15), which identifier is accessed by the cellular communication module (3) during the signing onto the mobile radio network in the emergency call mode.

7. Method according to one of the preceding claims, **characterized in that** a map, in which mobile radio network cell identifiers which are associated with positions of a satellite-based locating system are stored, is kept available in the computing unit (2) and/or the communication module (3), which map is accessed by the cellular communication module (3) during the signing onto the mobile radio network.

8. Method according to one of the preceding claims, **characterized in that** the switching over into the emergency call mode is initiated when a hazardous situation is detected by a driver assistance system (11) of the vehicle.

9. Method according to one of the preceding claims, **characterized in that** the computing unit (2) does not carry out any safety-related functions in the normal mode.

10. Emergency call unit having a cellular communication module (3) for transmitting an emergency call into a public mobile radio network, and a connection to a vehicle communication network (6) for communicating with other vehicle units (7, 11, 12) as well as a computing unit (2), **characterized in that** the computing unit (2) is configured to carry out the method according to one of Claims 1 to 9.

## Revendications

1. Procédé d'utilisation de l'unité de calcul (2) d'une unité d'appel d'urgence (1) qui présente un module (3) de communication cellulaire qui permet de lancer un appel d'urgence dans un réseau public de radiotéléphonie mobile et qui est relié par un réseau (6) de communication entre véhicules à d'autres unités de véhicule (7, 11, 12) qui présentent toutes une unité de calcul (8, 13, 14),
**caractérisé en ce que**
en mode normal, l'unité de calcul (2) de l'unité (1) d'appel d'urgence reprend certaines fonctions des unités de calcul (8, 13, 14) des autres unités de véhicule (7, 11, 12) et délivre les résultats des fonctions par l'intermédiaire du réseau (6) de communication entre véhicules et
**en ce que** l'unité de calcul (2) de l'unité d'appel d'urgence (1) bascule dans un mode d'appel d'urgence et émet l'appel d'urgence par le module (3) de communication cellulaire lorsque survient une situation de danger dans laquelle un appel d'urgence doit être lancé.

2. Procédé selon la revendication 1, **caractérisé en ce que** le basculement de l'unité de calcul (2) en mode d'appel d'urgence s'effectue par un relancement du processeur en mode d'amorçage duel.

3. Procédé selon la revendication 2, **caractérisé en ce que** le redémarrage du processeur s'effectue par une interruption qui force un redémarrage direct du processeur en mode d'appel d'urgence.

4. Procédé selon l'une des revendications précédentes, **caractérisé en ce que** l'unité de calcul (2) active directement le module de communication cellulaire (3) lors de l'activation du mode d'appel d'urgence et lance l'appel d'urgence après établissement d'une liaison de communication avec le réseau public de radiotéléphonie mobile.

5. Procédé selon l'une des revendications précédentes, **caractérisé en ce que** lorsque l'unité de calcul (2) est en mode normal, les informations nécessaires pour le lancement de l'appel d'urgence, notamment la position du véhicule, sont placées périodiquement dans une mémoire non volatile (15) de l'unité de calcul (2) à laquelle l'unité de calcul (2) a accès en mode d'appel d'urgence en vue de lancer l'appel d'urgence.

6. Procédé selon l'une des revendications précédentes, **caractérisé en ce qu'**en mode normal, l'unité de calcul (2) annonce le module (3) de communication cellulaire dans le réseau de radiotéléphonie mobile et **en ce qu'**une identification de la cellule en cours du réseau de radiotéléphonie mobile est conservée périodiquement dans une mémoire non volatile (15) à laquelle le module (3) de communication cellulaire a accès lors de son annonce dans le réseau de radiotéléphonie mobile en mode d'appel d'urgence.

7. Procédé selon l'une des revendications précédentes, **caractérisé en ce qu'**une carte dans laquelle les positions des identifications des cellules du réseau de radiotéléphonie mobile qui font partie d'un système de localisation par satellite sont conservées est fournie dans l'unité de calcul (2) et/ou dans le module (3) de communication, le module (3) de communication cellulaire ayant accès à cette carte lorsqu'il s'annonce dans le réseau de radiotéléphonie mobile.

8. Procédé selon l'une des revendications précédentes, **caractérisé en ce que** le basculement en mode d'appel d'urgence est lancé lorsqu'un système (11) d'assistance au conducteur du véhicule détecte une situation de danger.

9. Procédé selon l'une des revendications précédentes, **caractérisé en ce qu'**en mode normal, l'unité de calcul (2) n'exécute aucune fonction de sécurité.

10. Unité d'appel d'urgence présentant un module (3) de communication cellulaire permettant de lancer un appel d'urgence dans un réseau public de radiotéléphonie mobile et un raccordement à un réseau (6) de communication entre véhicules en vue de communiquer avec d'autres unités de véhicule (7, 11, 12), ainsi qu'une unité de calcul (2),
**caractérisée en ce que**
l'unité de calcul (2) est conçue pour exécuter le procédé selon l'une des revendications 1 à 9.
